# EUROPEAN PATENT APPLICATION

(11) **EP 3 406 927 A1**
(43) Date of publication of application: **28.11.2018**
(21) Application number: 18173892.3
(22) Date of filing: 23.05.2018
(51) Int. Cl.: F16D 48/04

(54) **CONNECTING AND DISCONNECTING DEVICE FOR CLUTCH**

(30) Priority: 25.05.2017 JP 2017104027
(71) Applicant: Toyota Jidosha Kabushiki Kaisha, Aichi-Ken 471-8571 (JP)
(72) Inventor: KITAI, Shinya, Aichi-ken 471-8571 (JP)
(74) Representative: D Young & Co LLP

(57) **Abstract**

A connecting and disconnecting device (30; 150) of a clutch (16) includes a clutch pedal (50), a clutch cylinder (54), a power transmission mechanism (56; 152), an electric actuator (70; 168), and a separation mechanism (76; 160). The power transmission mechanism is configured to transmit depressing force of the clutch pedal as operating force for the clutch cylinder. The electric actuator is connected to the power transmission mechanism so as to allow power transmission. The electric actuator is configured to apply the operating force to the clutch cylinder through the power transmission mechanism. The separation mechanism is provided on a portion of a power transmission path in the power transmission mechanism, the portion being between the clutch pedal and the electric actuator.

## Description

### BACKGROUND OF THE INVENTION

### 1. Field of the Invention

The present invention relates to a connecting and disconnecting device for a clutch, and more particularly relates to a connecting and disconnecting device for a clutch, the device being configured to connect and disconnect the clutch by transmitting depressing force from a clutch pedal as operating force for a clutch cylinder.

### 2. Description of Related Art

There is known a connecting and disconnecting device that connects and disconnects a clutch that is placed on a power transmission path between an engine and a transmission. For example, there is known a connecting and disconnecting device as disclosed in Japanese Patent Application Publication No. 2006-336783 (JP 2006-336783 A). The connecting and disconnecting device is configured to connect and disconnect a clutch by transmitting depressing force from a clutch pedal as operating force for a clutch cylinder and operating the clutch cylinder with the operating force. In JP 2006-336783 A, the connecting and disconnecting device includes an electric actuator (clutch assist device) that assists the depressing force of a clutch pedal. When operation of the electric actuator is controlled in accordance with the depressing force of the clutch pedal, the clutch operation is assisted.

### SUMMARY OF THE INVENTION

Control (hereinafter, coasting control) for enhancing fuel efficiency by automatically releasing a clutch by an electric actuator without operation of a driver during traveling of a vehicle is known. When the coasting control is applied to the connecting and disconnecting device in JP 2006-336783 A, it is considered that the electric actuator automatically releases the clutch. However, the connecting and disconnecting device in JP 2006-336783 A is configured such the clutch pedal, the electric actuator, and the clutch cylinder mechanically interlock with each other. Accordingly, during coasting control, a stroke location of the clutch pedal may change in accordance with the operation of the electric actuator, which may discomfort the driver.

The present invention provides a connecting and disconnecting device for a clutch, the device being able to prevent a stroke location of a clutch pedal from changing during coasting control.

A first aspect of the present invention relates to a connecting and disconnecting device for a clutch. The connecting and disconnecting device includes a clutch pedal, a clutch cylinder, a power transmission mechanism, an electric actuator, and a separation mechanism. The clutch pedal is configured to be operated by a driver. The power transmission mechanism is configured to transmit depressing force of the clutch pedal as operating force for the clutch cylinder. The electric actuator is connected to the power transmission mechanism so as to allow power transmission. The electric actuator is configured to apply the operating force to the clutch cylinder through the power transmission mechanism. The separation mechanism is provided on a portion of a power transmission path in the power transmission mechanism, the portion being between the clutch pedal and the electric actuator.

According to the configuration, since the separation mechanism is provided on the power transmission mechanism, the separation mechanism separates the clutch pedal and the clutch cylinder when the electric actuator applies operating force to the clutch cylinder while the clutch pedal is not depressed. Hence, it is possible to prevent the situation where the stroke location of the clutch pedal is changed although the driver does not depress the clutch pedal.

The connecting and disconnecting device may further include an electronic control unit. The electronic control unit may be configured to control the electric actuator so as to reduce depressing force necessary to depress the clutch pedal and to apply the operating force in a direction of releasing the clutch to the clutch cylinder, when the driver depresses the clutch pedal.

According to the configuration, when the driver depresses the clutch pedal, the electric actuator applies the operating force in the direction of reducing the depressing force of the clutch pedal to the clutch release cylinder. As a result, the depressing force necessary for the driver to depress the clutch pedal can be reduced.

The connecting and disconnecting device may further include an electronic control unit configured to control the electric actuator so as to release the clutch, when the driver does not depress the clutch pedal.

According to the configuration, when the driver does not depress the clutch pedal, the electric actuator releases the clutch. Accordingly, as a travel resistance applied to a vehicle is reduced and an inertia traveling distance becomes longer, a fuel consumption reduction effect can be enhanced.

In the connecting and disconnecting device, the power transmission mechanism may include a clutch master cylinder, a first cylinder, and a second cylinder. The clutch master cylinder may be placed between the clutch pedal and the separation mechanism. The first cylinder and the second cylinder may be placed between the clutch master cylinder and the clutch cylinder. The separation mechanism and the electric actuator may be placed between the first cylinder and the second cylinder.

According to the configuration, the separation mechanism and the electric actuator are placed between the first cylinder and the second cylinder. Accordingly, by adjusting the pressure-receiving area of the first cylinder and the second cylinder, the operating force to be output from the electric actuator can be decreased. This makes it possible to downsize the electric actuator and to reduce power consumption.

In the connecting and disconnecting device, the power transmission mechanism may include a clutch master cylinder coupled with the clutch cylinder through an oil passage. The separation mechanism and the electric actuator may be placed between the clutch pedal and the clutch master cylinder.

According to the configuration, since the separation mechanism and the electric actuator are placed between the clutch pedal and the master cylinder, the connecting and disconnecting device can be simplified, and increase in the number of parts count can be suppressed.

In the connecting and disconnecting device, the separation mechanism may include a first member, a second member, and a pedal position keeping mechanism. The first member may be configured to interlock with the clutch pedal. The second member may be configured to interlock with the clutch cylinder and to come into contact with the first member while the clutch pedal is depressed. The pedal position keeping mechanism may be configured to generate keeping force to keep the first member at the position where depressing of the clutch pedal is released.

According to the configuration, when the electric actuator moves the second member away from the first member, the pedal position keeping mechanism keeps the first member at the position where depressing of the clutch pedal is released. This makes it possible to prevent change in the stroke location of the clutch pedal caused by operation of the electric actuator.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 schematically illustrates a part of a drive unit and a control system of the drive unit included in a vehicle to which the present invention is applied;
FIG. 2 illustrates a simplified structure of a clutch in FIG. 1, and a simplified structure of a connecting and disconnecting device for connecting and disconnecting the clutch;
FIG. 3 illustrates the state where a clutch pedal is depressed by a driver in the connecting and disconnecting device of FIG. 2;
FIG. 4 illustrates the state where an electric actuator moves a second member away from a first member in the connecting and disconnecting device of FIG. 2;
FIG. 5 is a functional block diagram for describing a control function of an electronic control unit included in the connecting and disconnecting device of FIG. 2;
FIG. 6 is a flowchart for describing a principle part of control operation of the electronic control unit of FIG. 5, the principle part including control operation of the connecting and disconnecting device in a normal travel mode where the clutch pedal is operated; and
FIG. 7 illustrates a simplified structure of a clutch corresponding to another embodiment of the present invention, and a simplified structure of a connecting and disconnecting device that connects and disconnects the clutch.

### DETAILED DESCRIPTION OF EMBODIMENTS

Hereinbelow, the embodiments of the present invention will be described in detail with reference to the accompanying drawings. In the following embodiments, the drawings are simplified or deformed as necessary, and the details of each component, such as a proportion, and a form, may be different from those of real components.

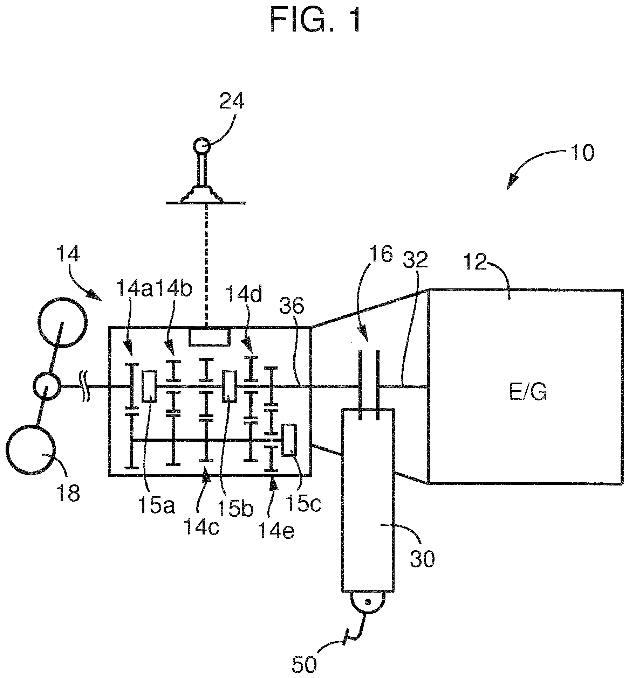

FIG. 1 is an outline diagram schematically illustrating a part of a drive unit 10 included in a vehicle to which the present invention is applied. As illustrated in FIG. 1, the drive unit 10 includes an engine 12 and a manual transmission 14. In a power transmission path between the engine 12 and the manual transmission 14, a clutch 16 that functions as a connecting and disconnecting mechanism is provided. The clutch 16 is suitably connected and disconnected by a connecting and disconnecting device 30. The structure and operation of the connecting and disconnecting device 30 will be described later.

The engine 12 is a drive power source that generates drive power for traveling of the drive unit 10. For example, the engine 12 is an internal combustion engine, such as a gasoline engine or a diesel engine. The engine 12 generates drive power by combustion of fuel that is injected into a cylinder. The clutch 16 is normally in an engagement state to connect a power transmission path between the engine 12 and the manual transmission 14. When depressing operation of the clutch pedal 50 is made, or when the later-described electronic control unit 100 performs control operation, the clutch 16 is put in a slip state where torque capacity decreases or in a power transmission disconnected state where the power transmission path between the engine 12 and the manual transmission 14 is disconnected. Thus, the clutch 16 is a connecting and disconnecting device that connects and disconnects transmission of the motive power output from the engine 12 to the manual transmission 14.

The manual transmission 14 is a parallel two-shaft stepped transmission mechanism (manual transmission) provided in the power transmission path between the engine 12 and driving wheels 18. The manual transmission 14 decelerates or accelerates rotation input from the engine 12 at a specified gear ratio γ by selecting one gear stage out of a plurality of gear stages (shift stages) through manual operation of a shift lever 24 by a driver and outputs the rotation. The manual transmission 14 includes a plurality of gear pairs 14a to 14e, each pair constantly gearing with each other between two rotary shafts. When gears in pair, corresponding to any one gear stage to be shifted, are connected to each other between the rotary shafts so as to allow power transmission, the gear stage among five advance gear stages and a reverse gear stage is established, the advance gear stages including a first gear stage "1st" to a fifth gear stage "5th", for example.

Synchromesh mechanisms 15a to 15c (synchronization mechanism) synchronize rotation speeds of the rotary shafts that are different in rotation speed. Smooth gear shift is achieved when the synchromesh mechanisms 15a to 15c operate at the time of gear shift. When none of the gear stages is selected, the manual transmission 14 is in a neutral state (power transmission disconnected state). That is, when the shift lever 24 is operated to be at a shift operation position corresponding to a specified gear stage, the gear stage of the manual transmission 14 is shifted to the selected gear stage. When the shift lever 24 is shifted to a neutral position where none of the gear stages is selected, the manual transmission 14 is in the neutral state. Thus, the drive unit 10 is a manual transmission vehicle (MT vehicle) including the manual transmission 14 that selectively forms a plurality of gear stages by the manual operation of the shift lever 24 by the driver.

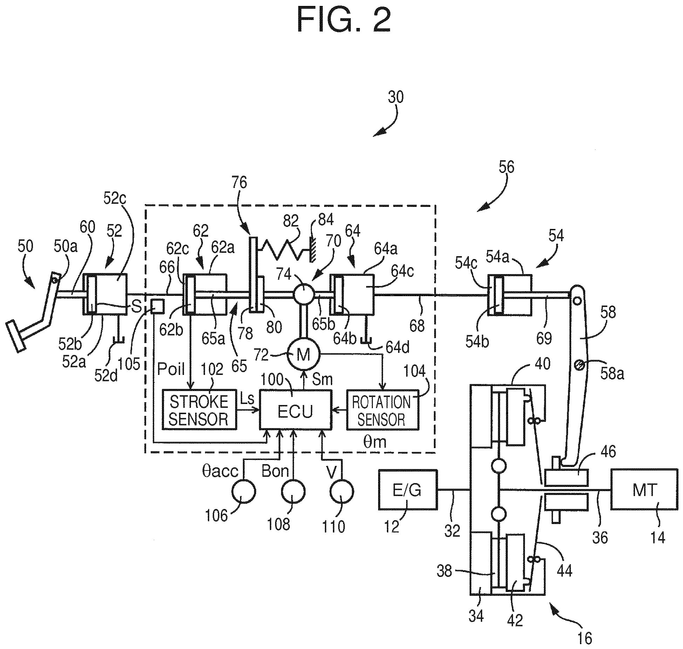

FIG. 2 illustrates a simplified structure of the clutch 16 in FIG. 1, and a simplified structure of the connecting and disconnecting device 30 for connecting and disconnecting the clutch 16. FIG. 2 illustrates an inactive state of a later-described electric actuator 70, where the driver does not depress the clutch pedal 50.

The clutch 16 is configured to include a flywheel 34 attached to an output shaft 32 of the engine 12, a clutch disc 38 attached to a transmission input shaft 36 of the manual transmission 14, a clutch cover 40 connected to the flywheel 34, and a pressure plate 42 housed in the clutch cover 40. The clutch 16 is also configured to include a diaphragm spring 44 that generates urging force to press the clutch disc 38 against the flywheel 34, and a release bearing 46 placed at the outer peripheral side of the transmission input shaft 36, the release bearing 46 being movable relative to the transmission input shaft 36 in an axial direction of the transmission input shaft 36.

When the clutch 16 is in the engaged state, the diaphragm spring 44 presses the pressure plate 42 and the clutch disc 38 to the flywheel 34. At the time, the flywheel 34 and the clutch disc 38 are in tight contact with each other. When the release bearing 46 axially moves to the engine 12 side, the inner peripheral side of the diaphragm spring 44 is pressed, so that the diaphragm spring 44 is deformed. As a result, the urging force for pressing the clutch disc 38 against the flywheel 34 reduces. When the release bearing 46 reaches a specified position, the urging force of the diaphragm spring 44 pressing the clutch disc 38 against the flywheel 34 becomes zero, so that the clutch disc 38 is separated from the flywheel 34. At the time, the clutch 16 is released (disconnected).

The connecting and disconnecting device 30 is provided to connect and disconnect the clutch 16. The connecting and disconnecting device 30 is configured to include a clutch pedal 50 operated by the driver, a clutch release cylinder 54 (hereinafter release cylinder 54) that receives depressing force of the clutch pedal 50 transmitted as operating force, a power transmission mechanism 56 that transmits the depressing force of the clutch pedal 50 as the operating force for the release cylinder 54, and a release fork 58 that transmits an operation amount of the release cylinder 54 to a release bearing 46. The release cylinder 54 corresponds to the clutch cylinder of the present invention.

The clutch pedal 50 is turned around a fulcrum 50a, when the driver depresses the clutch pedal 50.

The power transmission mechanism 56 constitutes a power transmission path between the clutch pedal 50 and the release cylinder 54. That is, the power transmission mechanism 56 couples the clutch pedal 50 with the release cylinder 54 to allow power transmission (operatively).

The power transmission mechanism 56 includes a clutch master cylinder 52 (hereinafter master cylinder 52) that converts depressing force Fft of the clutch pedal 50 provided by the driver into hydraulic pressure, a first cylinder 62 operatively coupled with the master cylinder 52, and a second cylinder 64 placed between the first cylinder 62 and the release cylinder 54.

The clutch pedal 50 and the master cylinder 52 are coupled operatively (mechanically) through a coupling rod 60. The master cylinder 52 and the first cylinder 62 are operatively coupled through the first oil passage 66. The first cylinder 62 and the second cylinder 64 are coupled operatively (mechanically) through a coupling rod 65. The second cylinder 64 and the release cylinder 54 are operatively coupled through a second oil passage 68.

The master cylinder 52 includes a cylindrical cylinder body 52a, a disc-like piston 52b slidably incorporated in the cylinder body 52a, a hydraulic pressure chamber 52c that is formed in the cylinder body 52a and is filled with a hydraulic fluid, and a reservoir tank 52d for reserving the hydraulic fluid. The piston 52b and the clutch pedal 50 are mechanically coupled through the coupling rod 60. When the clutch pedal 50 is depressed, the piston 52b moves inside the cylinder body 52a in accordance with a depressing amount. At the time, hydraulic pressure is generated in the hydraulic pressure chamber 52c.

The first cylinder 62 is configured to include a cylindrical cylinder body 62a, a disc-like piston 62b slidably incorporated in the cylinder body 62a, and a hydraulic pressure chamber 62c that is formed in the cylinder body 62a and is filled with hydraulic fluid. The hydraulic pressure chamber 52c of the master cylinder 52 and the hydraulic pressure chamber 62c of the first cylinder 62 are operatively coupled through the first oil passage 66. Specifically, when the hydraulic pressure generated in the master cylinder 52 is transmitted to the first cylinder 62 through the first oil passage 66, the piston 62b of the first cylinder 62 is pressed. As a consequence, the piston 62b moves inside the cylinder body 62a.

The second cylinder 64 is configured to include a cylindrical cylinder body 64a, a disc-like piston 64b slidably incorporated in the cylinder body 64a, a hydraulic pressure chamber 64c that is formed in the cylinder body 64a and is filled with hydraulic fluid, and a reservoir tank 64d. The piston 62b of the first cylinder 62 and the piston 64b of the second cylinder 64 are operatively (mechanically) coupled through the coupling rod 65. When the piston 62b axially moves to the release cylinder 54 side, the piston 64b axially moves in proportion to a movement amount of the piston 62b through the coupling rod 65. The coupling rod 65 is constituted of a first rod 65a and a second rod 65b that are placed in series. A later-described separation mechanism 76 is interposed between the first rod 65a and the second rod 65b.

The release cylinder 54 is configured to include a cylindrical cylinder body 54a, a disc-like piston 54b slidably incorporated in the cylinder body 54a, and a hydraulic pressure chamber 54c that is formed in the release cylinder 54 and is filled with hydraulic fluid. The hydraulic pressure chamber 54c of the release cylinder 54 and the hydraulic pressure chamber 64c of the second cylinder 64 are operatively coupled through the second oil passage 68. Specifically, when the piston 64b of the second cylinder 64 is moved, the hydraulic pressure generated inside the hydraulic pressure chamber 64c is transmitted to the release cylinder 54 through the second oil passage 68. Accordingly, the piston 54b of the release cylinder 54 is pressed, so that the piston 54b is moved. The piston 54b is coupled with a push rod 69, and the push rod 69 moves integrally with the piston 54b.

Hence, in the power transmission mechanism 56, the depressing force Fft generated when the clutch pedal 50 is depressed is transmitted as operating force for the release cylinder 54 through the clutch master cylinder 52, the first oil passage 66, the first cylinder 62, the coupling rod 65, the second cylinder 64, and the second oil passage 68. When the operating force is transmitted to the release cylinder 54, the push rod 69 coupled with the piston 54b of the release cylinder 54 is axially moved so as to press one end portion of the release fork 58. At the time, the release fork 58 is turned around the fulcrum 58a, and the other end portion of the release fork 58 presses the release bearing 46 of the clutch 16. As a result, the clutch 16 is released with the movement of the release bearing 46.

The second rod 65b that constitutes the coupling rod 65 is connected to the electric actuator 70. The electric actuator 70 is connected to the second rod 65b (power transmission mechanism 56) so as to allow power transmission in order to enable application of the operating force to the release cylinder 54 through the second rod 65b (power transmission mechanism 56). The electric actuator 70 is constituted of an electric motor 72 and a reducer 74 connected to the second rod 65b so as to allow power transmission.

The electric motor 72 is rotationally driven by the later-described electronic control unit 100. The reducer 74 is a mechanism constituted from, for example, a ball screw to convert the rotational movement of the electric motor 72 into axial translational movement of the second rod 65b. Therefore, when the electric motor 72 rotates, axial operating force is applied to the second rod 65b. Accordingly, the second rod 65b is moved in the axial direction in accordance with the rotational position.

Provided between the first rod 65a and the second rod 65b that constitute the coupling rod 65 is the separation mechanism 76 that can connect and disconnect the first rod 65a and the second rod 65b. In other words, the separation mechanism 76 is provided on a portion of the power transmission mechanism 56, the portion being between the clutch pedal 50 and the electric actuator 70 (reducer 74). The separation mechanism 76 includes a plate-shaped first member 78 connected to an axis end of the first rod 65a, a plate-shaped second member 80 connected to an axis end of the second rod 65b, and a pedal position keeping mechanism 82 coupled with the first member 78. The first member 78 is configured to interlock with the clutch pedal 50 through the master cylinder 52 and the first cylinder 62, and the second member 80 is configured to interlock the second cylinder 64 with the release cylinder 54.

The first member 78 and second member 80 are placed such that their plate surfaces face each other and that their plate surfaces are in contact with each other when the clutch pedal 50 is depressed. The pedal position keeping mechanism 82 is interposed between the first member 78 and the fixed member 84. The pedal position keeping mechanism 82 is constituted from an elastic member, such as a spring, to generate keeping force Fkeep that keeps the first member 78 at a depression release position where depression of the clutch pedal 50 is released. The position of the first member 78 illustrated in FIG. 2 corresponds to the depression release position. In FIG. 2, depression of the clutch pedal 50 is released. At the time, the first member 78 is kept at the depression release position by the keeping force Fkeep of the pedal position keeping mechanism 82. The keeping force Fkeep is obtained in advance by experiments or by design. The keeping force Fkeep is set to be at least large enough to prevent the clutch pedal 50 from moving when the driver just sets his or her leg on the clutch pedal 50.

In FIG. 2, the second member 80 is moved to the position where the clutch 16 is completely engaged, when the urging force (elastic return force) from the diaphragm spring 44 is transmitted through the release bearing 46, the release fork 58, the release cylinder 54, the second cylinder 64, and the second rod 65b. In the present embodiment, in the state where the driver does not depress the clutch pedal 50 and the electric actuator 70 is inactive, the first member 78 and the second member 80 are adjusted to come into contact with each other in the separation mechanism 76.

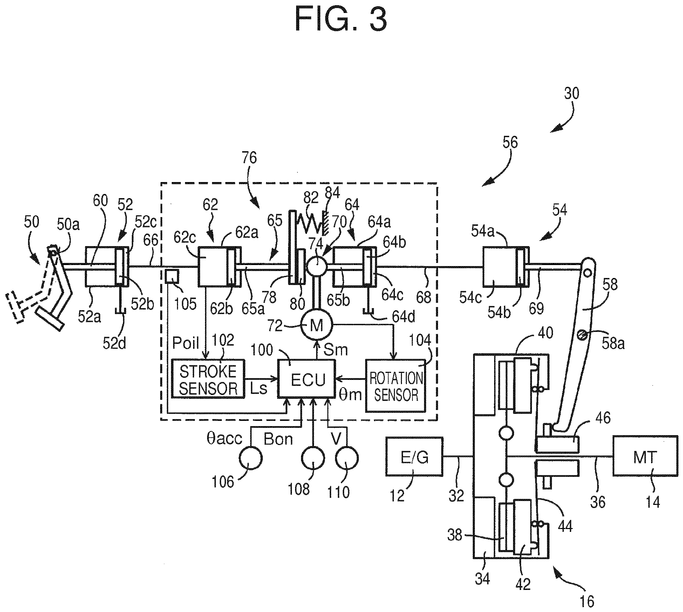

FIG. 3 illustrates the state where the clutch 16 is released since the driver depresses the clutch pedal 50. When the clutch pedal 50 is depressed, hydraulic pressure is generated in the hydraulic pressure chamber 52c of the master cylinder 52, and the generated hydraulic pressure is transmitted to the hydraulic pressure chamber 62c of the first cylinder 62 through the first oil passage 66. The hydraulic pressure causes the first cylinder 62 to operate, and causes the piston 62b and the first rod 65a coupled with the piston 62b to axially move to the release cylinder 54 side (right side on the page). At the time, the first member 78 connected to the first rod 65a is moved to the release cylinder 54 side against the keeping force Fkeep of the pedal position keeping mechanism 82 until the first member 78 reaches the engagement release position of the clutch 16 illustrated in FIG. 3.

In FIG. 3, the second member 80 is pressed by the first member 78 so as to be moved to the engagement release position of the clutch 16 illustrated in FIG. 3. At the time, the pressing force from the first member 78 is transmitted to the second member 80 when the first member 78 and the second member 80 come into contact with each other in the separation mechanism 76. Furthermore, since the second rod 65b coupled with the second member 80 moves to the release cylinder 54 side, the piston 64b moves in conjunction with the second rod 65b. At the time, hydraulic pressure is generated in the hydraulic pressure chamber 64c of the second cylinder 64, and the hydraulic pressure is transmitted to the hydraulic pressure chamber 54c of the release cylinder 54 through the second oil passage 68. Since the piston 54b of the release cylinder 54 is pressed by the hydraulic pressure, the piston 54b and the push rod 69 are moved to the side of releasing the clutch 16. Accordingly, the clutch 16 is released through the release fork 58.

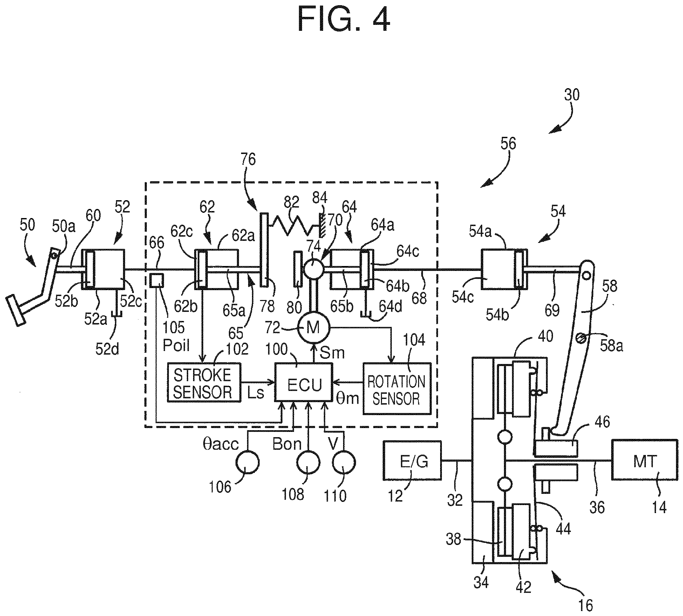

FIG. 4 illustrates the state where the driver does not depress the clutch pedal 50, and so the electric actuator 70 releases the clutch 16. When the electric actuator 70 is driven, the second rod 65b axially moves to the release cylinder 54 side, so that hydraulic pressure is generated in the hydraulic pressure chamber 64c of the second cylinder 64. The generated hydraulic pressure is transmitted to the hydraulic pressure chamber 54c as operating force for the release cylinder 54. In connection with the transmission, the piston 54b of the release cylinder 54 moves, and the push rod 69 coupled with the piston 54b moves to the release side of the clutch 16. As a result, the release fork 58 is pressed, and the clutch 16 is released. Thus, the electric actuator 70 is configured to be able to apply the operating force that can release the clutch 16.

In FIG. 4, the pedal position keeping mechanism 82 keeps the first member 78 at the depression release position of the clutch pedal 50. With the axial movement of the second rod 65b, the second member 80 is moved to the side (release cylinder 54 side) away from the first member 78. Therefore, the first member 78 is distanced from the second member 80, so that the first member 78 and the second member 80 are separated in the separation mechanism 76. Hence, even when the electric actuator 70 releases the clutch 16, the separation mechanism 76 separates the first member 78 and the second members 80, which prevents the first rod 65a and the second rod 65b from interlocking. As a result, the clutch pedal 50 is kept at the depression release position.

The state illustrates in FIG. 4 is achieved when an inertia traveling condition for execution of inertia traveling is established, and therefore an automatic control request of the electric actuator 70 is output, and the electric actuator 70 is controlled. When the clutch 16 is released during inertia traveling, the power transmission path between the engine 12 and the manual transmission 14 is disconnected. Accordingly, the travel resistance applied to the vehicle decreases, and the inertia traveling distance (and inertia traveling time) in which inertia traveling is possible increases. Here, in the present embodiment, the engine 12 is stopped during inertia traveling in which the clutch 16 is released. Therefore, when the inertia traveling distance (and inertia traveling time) increases with release of the clutch 16 during the inertia traveling, the effect of reduction in fuel consumption due to inertia traveling is enhanced.

As illustrated in FIGS. 2 to 4, the first cylinder 62 and the second cylinder 64 are placed on a portion of the power transmission mechanism 56 between the master cylinder 52 and the release cylinder 54. Between the first cylinder 62 and second cylinder 64, the separation mechanism 76 and the electric actuator 70 (reducer 74) are placed. Specifically, the first cylinder 62 is placed between the master cylinder 52 and the separation mechanism 76, and the second cylinder 64 is placed between the reducer 74 of the electric actuator 70 and the release cylinder 54.

With the above placement, in an area between the master cylinders 52 and the release cylinders 54, the area being surrounded with a dashed line in FIG. 2, component members such as the first cylinder 62, the separation mechanism 76, the electric actuator 70, the second cylinder 64, a later-described electronic control unit 100, a stroke sensor 102, a rotation sensor 104, and an oil pressure sensor 105 can be constituted as one assembly. Here, in an existing vehicle, the master cylinder 52 and the release cylinder 54 are connected through an oil passage, and therefore it is difficult to change the placement positions of the cylinders due to design restrictions. However, since the above component members are constituted as one assembly, it is possible to change design by providing the assembly between the master cylinder 52 and the release cylinder 54. Therefore, since the above configuration can be implemented with a small change from the existing vehicle, enhanced versatility is achieved. Although the first cylinder 62 and the second cylinder 64 are incorporated in the hydraulic circuit, adjusting the pressure-receiving area of the first cylinder 62 and the second cylinder 64 makes it possible to reduce the urging force to be generated from the electric actuator 70 with respect to the depressing force Fft of the clutch pedal 50. As a result, the electric actuator 70 (mainly the electric motor 72) can be downsized, and so the electric power consumption of the electric motor 72 can be reduced.

The electronic control unit 100 controls the driving state of the electric actuator 70. For example, the electronic control unit 100 is configured to include a so-called microcomputer including a CPU, a RAM, a ROM, and an input-output interface. The CPU controls the driving state of the electric actuator 70 by performing signal processing in accordance with the programs prestored in the ROM, while using a temporary storage function of the RAM.

The electronic control unit 100 receives various signals. The signals include a signal indicative of a stroke location Ls of the piston 62b in the first cylinder 62 that corresponds to a pedal stroke location Lpd of the clutch pedal 50, the stroke location Ls being detected by the stroke sensor 102, and a signal indicative of a rotational position θm of the electric motor 72 relating to the operating state of the clutch 16, the rotational position θm being detected by the rotation sensor 104. The signals also includes a signal indicative of a hydraulic pressure Poil in the first oil passage 66, the hydraulic pressure Poil being detected by the oil pressure sensor 105, a signal indicative of an accelerator operation amount θacc detected by an accelerator operation amount sensor 106, a signal indicative of the presence or absence Bon of brake operation detected by the brake switch 108, and a signal indicative of vehicle speed V detected by the vehicle speed sensor 110. The electronic control unit 100 outputs a driving signal Sm of the electric motor 72.

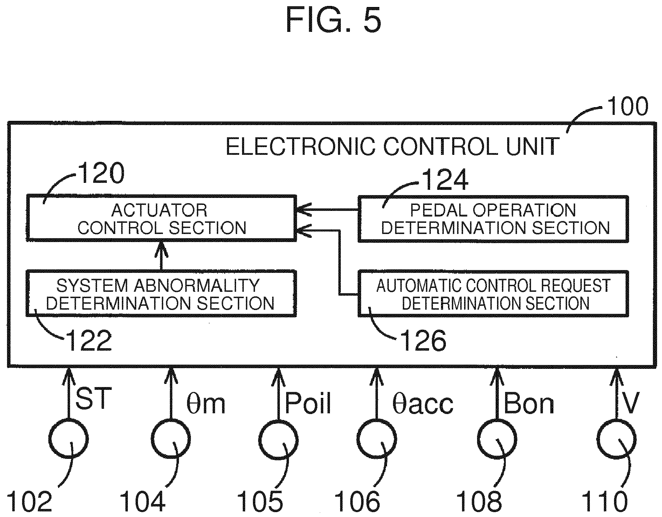

FIG. 5 is a functional block diagram for describing the control function of the electronic control unit 100. The electronic control unit 100 functionally includes an actuator control section 120 that functions as actuator control means, a system abnormality determination section 122 that functions as system abnormality determining means, a pedal operation determination section 124 that functions as pedal operation determination means, and an automatic control request determination section 126 that functions as automatic control request determination means.

The actuator control section 120 controls the electric actuator 70 (electric motor 72) in accordance with vehicle traveling conditions to apply the operating force for moving the second rod 65b in the axial direction through the reducer 74. Accordingly, the operating state of the power transmission mechanism 56, that is, the connecting and disconnecting state of the clutch 16 is controlled.

The actuator control section 120 controls the electric actuator 70 (electric motor 72) based on each determination result by the system abnormality determination section 122, the pedal operation determination section 124, and the automatic control request determination section 126, which are executed at any time during vehicle operation.

The system abnormality determination section 122 determines occurrence of system abnormality of the connecting and disconnecting device 30. The system abnormality determination section 122 determines that abnormality occurs in the system, in the case where, for example, a difference Δθ (= |θmst - θm|) between a reference value 0mst of the rotational position θm of the electric motor 72, based on the pedal stroke location Lpd of the clutch pedal 50 calculated from the stroke location Ls of the piston 62b in the first cylinder 62, and an actual rotational position θm of the electric motor 72 detected by the rotation sensor 104 is larger than a preset allowable value alpha. The allowable value alpha is set as a threshold in the range where the system operation can be determined to be normal. Since the pedal stroke location Lpd of the clutch pedal 50 and the stroke location Ls of the piston 62b of the first cylinder 62 have one-to-one relationship, the pedal stroke location Lpd is uniquely calculated from the stroke location Ls.

Since the clutch pedal 50 and the electric motor 72 are coupled mechanically, the rotational position θm of the electric motor 72 relative to the pedal stroke location Lpd is determined uniquely. The system abnormality determination section 122 stores the rotational position θm of the electric motor 72 relative to the pedal stroke location Lpd as a reference value θmst, and determines whether or not the difference Δθ between the reference value θmst and the actually detected rotational position θ is larger than the allowable value alpha. When the difference Δθ is larger than the allowable value alpha, there is a possibility that abnormality occurs in the stroke sensor 102 or the rotation sensor 104. Therefore, the system abnormality determination section 122 determines that abnormality occurs in the system of the connecting and disconnecting device 30, when the difference Δθ becomes equal to or above the allowable value alpha.

When the system abnormality determination section 122 determines that abnormality occurs in the system, the actuator control section 120 switches the mode of operation to a fail-safe mode where the electric actuator 70 is inactive. When the electric actuator 70 is inactive, the operating force is no longer applied from the electric actuator 70. Hence, the depressing force Fft necessary for depressing the clutch pedal 50 increases. Therefore, since the driver feels the discomfort due to the increase of the depressing force Fft, the driver can sense the abnormality of the system. Furthermore, even when abnormality occurs in the system, the connecting and disconnecting device 30 can transmit the operating force to the release cylinder 54 by the depressing operation of the clutch pedal 50 because the clutch pedal 50 and the clutch 16 are coupled mechanically. This enables the driver to connect and disconnect the clutch 16. Therefore, since travel operation (such as limp home operation) can be continued even when abnormality occurs in the system, the reliability of the connecting and disconnecting device 30 is enhanced.

The pedal operation determination section 124 calculates the pedal stroke location Lpd of the clutch pedal 50 from the stroke location Ls of the piston 62b in the first cylinder 62 detected by the stroke sensor 102. Based on whether or not the calculated pedal stroke location Lpd is larger than zero, the pedal operation determination section 124 determines the presence or absence of the operation of the clutch pedal 50. In the present embodiment, the pedal stroke location Lpd is set to zero in the state where depression of the clutch pedal 50 is released.

When the pedal operation determination section 124 determines that the clutch pedal 50 is operated (operation is performed), the actuator control section 120 controls the electric actuator 70 (electric motor 72) to execute assist control that applies to the release cylinder 54 the operating force (hereinafter assist force Fas) in the direction of reducing the depressing force Fft of the clutch pedal 50, i.e., in the direction of releasing the clutch 16. Specifically, the actuator control section 120 assists a shortage of the depressing force necessary for actual clutch pedal operation by causing the electric actuator 70 to generate the assist force Fas such that the depressing force Fft generated when the clutch pedal 50 is depressed matches a target clutch pedal depressing force Fft_tg set in accordance with the pedal stroke location Lpd. The assist control of the electric actuator 70 by the actuator control section 120 will be described below.

The actuator control section 120 calculates the depressing force Fft of the clutch pedal 50 by multiplying a hydraulic pressure Poil in the first oil passage 66 detected by the oil pressure sensor 105 by a pressure-receiving area S of the piston 52b of the master cylinder 52 (Poil × S).

The actuator control section 120 prestores a relation map of the target depressing force Fft_tg with respect to the pedal stroke location Lpd of the clutch pedal 50. The actuator control section 120 calculates the target depressing force Fft_tg by applying the pedal stroke location Lpd of the clutch pedal 50 to the relation map. The relation map, which is obtained by experiments or by design in advance, is set to values in consideration of the operability of the clutch pedal 50.

The actuator control section 120 calculates a difference ΔFft (= Fft - Fft_tg) between the depressing force Fft of the clutch pedal 50 based on the hydraulic pressure Poil detected by the oil pressure sensor 105 and the target depressing force Fft_tg obtained from the pedal stroke location Lpd, and calculates an assist force Fas of the electric actuator 70 necessary to generate the difference ΔFft. The actuator control section 120 also prestores a relation map between an operating force Fac applied (transmitted) to the power transmission mechanism 56 from the electric actuator 70 and an indicator current lid of the electric motor 72. The actuator control section 120 calculates the indicator current lid by applying the calculated assist force Fas to the operating force Fac in the relation map. When the actuator control section 120 outputs the calculated indicator current lid to the electric motor 72, the assist force Fas corresponding to the pedal stroke location Lpd is generated, and the depressing force Fft of the clutch pedal 50 is controlled to be the target depressing force Fft_tg.

When the pedal operation determination section 124 determines that the clutch pedal 50 is not operated (operation is not performed), the automatic control request determination section 126 determines whether an automatic control request of the clutch 16 is output from the electric actuator 70. In the present embodiment, the electric actuator 70 outputs the automatic control request of the clutch 16 when the inertia travel condition for executing the inertia traveling is established. Therefore, the automatic control request determination section 126 determines that the automatic control request is output, when the inertia travel condition, where the accelerator operation amount θacc is zero and the brake switch Bon is in an OFF state, is established. The automatic control request determination section 126 also determines that the automatic control request is output, when a travel mode (hereinafter pedal operation-less travel mode), where operation of the clutch pedal 50 by the driver is unnecessary, is selected.

When the automatic control request is determined to be output because the inertia travel condition is established, the actuator control section 120 executes automatic connecting and disconnecting control. The automatic connecting and disconnecting control is for controlling the electric actuator 70 so as to cause the electric actuator 70 to generate the operating force in the direction of releasing the clutch 16 and thereby moving the second rod 65b to the release side (release cylinder 54 side) of the clutch 16 to release the clutch 16.

When the clutch 16 is released during inertia traveling, the power transmission between the engine 12 and the manual transmission 14 are disconnected, and therefore the travel resistance applied to the vehicle is reduced. As a result, the inertia traveling distance (and inertia traveling time) in which inertia traveling is possible increases as compared with the inertia traveling when the clutch 16 is connected. In the present embodiment, the engine 12 is stopped during inertia traveling while the clutch 16 is released. Accordingly, the fuel consumption reduction effect is enhanced in proportion to the increased inertia traveling distance (and inertia traveling time) in the inertia traveling. Such control that releases the clutch 16 during inertia traveling is also called coasting control.

Here, as illustrated in FIG. 4, in the state where the electric actuator 70 releases the clutch 16, the second rod 65b of the second cylinder 64 and the second member 80 move to the release cylinder 54 side. At the time, the second member 80 moves to the side distanced from the first member 78 in the separation mechanism 76. Meanwhile, the pedal position keeping mechanism 82 keeps the first member 78 at the depression release position of the clutch pedal 50. Therefore, even in the case where the electric actuator 70 releases the clutch 16, the clutch pedal 50 is kept at the depression release position because the first member 78 and the second member 80 are separated in the separation mechanism 76. This makes it possible to prevent change in the pedal stroke location Lpd of the clutch pedal 50 caused by operation of the electric actuator 70.

When the clutch pedal 50 is depressed during automatic connecting and disconnecting control of the clutch 16 by the electric actuator 70, the depressing force Fft of the clutch pedal 50 decreases as compared with the case where the separation mechanism 76 is connected. As a consequence, the feeling during a depression transition stage of the clutch pedal 50 changes, which enables the driver to sense execution of an interruption operation during the automatic connecting and disconnecting control of the clutch 16.

When the inertia travel condition is not established because of such reasons as the accelerator pedal being depressed during automatic connecting and disconnecting control of the clutch 16 performed by the electric actuator 70, the actuator control section 120 controls the electric actuator 70 to connect the clutch 16, and ends the automatic connecting and disconnecting control.

When the automatic control request is determined to be output because the pedal operation-less travel mode is selected, the actuator control section 120 controls the electric actuator 70 to execute automatic connecting and disconnecting control that suitably connects and disconnects the clutch 16.

For example, when the pedal operation-less travel mode is selected, and the accelerator pedal is depressed at the time of starting the vehicle, the actuator control section 120 controls the electric actuator 70 to connect the clutch 16 at a preset engagement speed. When the brake pedal is depressed at the time of stopping the vehicle, so that the vehicle speed V becomes equal to or below a threshold at which the vehicle is expected to stop, the actuator control section 120 prevents engine shutdown by controlling the electric actuator 70 to release the clutch 16. When selection of the pedal operation-less travel mode is cancelled, the automatic connecting and disconnecting control is ended and is switched to the control involving operation of the clutch pedal 50.

When a sudden depression release operation of the clutch pedal 50 is performed at the time of vehicle start and at the time of shift change, the actuator control section 120 controls the electric actuator 70 to prevent sudden engagement of the clutch 16 and thereby suppress engine failure and shift shock.

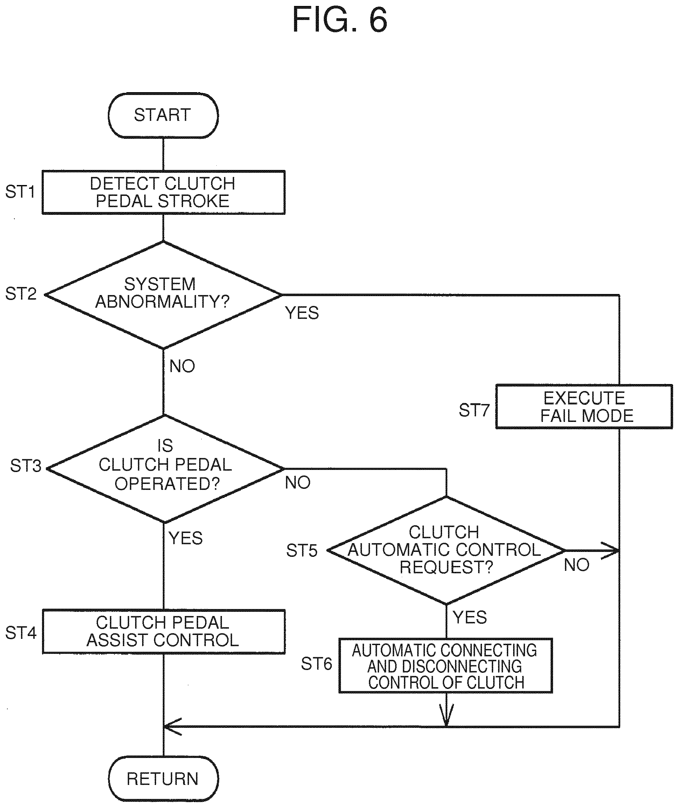

FIG. 6 is a flowchart for describing a principle part of the control operation of the electronic control unit 100, the principle part being control operation of the connecting and disconnecting device 30 during traveling. The flowchart is repeatedly executed during traveling of the vehicle.

First, in step ST1 (hereinafter a term "step" is omitted) corresponding to the control function of the actuator control section 120, the actuator control section 120 detects the pedal stroke location Lpd of the clutch pedal 50 based on the stroke location Ls of the piston 62b in the first cylinder 62 detected by the stroke sensor 102.

Next, in ST2 corresponding to the control function of the system abnormality determination section 122, the system abnormality determination section 122 determines whether abnormality occurs in the system of the connecting and disconnecting device 30. When the system abnormality determination section 122 does not determine the abnormality of the system, negative determination is made in ST2, and the processing proceeds to ST3. When the system abnormality determination section 122 determines the abnormality of the system, positive determination is made in ST2, and the processing proceeds to ST7.

In ST7 corresponding to the control function of the actuator control section 120, the electric actuator 70 (electric motor 72) becomes inactive in connection with determination of the abnormality of the system, so that the operating force (assist force Fas) is no longer applied from the electric actuator 70. As a result, as the depressing force Fft necessary for operation of the clutch pedal 50 increases, the driver feels discomfort and thereby senses the occurrence of abnormality. Even when the electric actuator 70 becomes inactive, the clutch 16 can still be connected and disconnected by the driver operating the clutch pedal 50. Hence, traveling of the vehicle can be continued.

In ST3 corresponding to the control function of the pedal operation determination section 124, the pedal operation determination section 124 determines the presence or absence of the operation of the clutch pedal 50. When the pedal operation determination section 124 determines the operation of the clutch pedal 50 (operation is performed), positive determination is made in ST3, and the processing proceeds to ST4. When the pedal operation determination section 124 determines that the driver does not operate the clutch pedal 50 (the driver does not depress the clutch pedal 50) (operation is not performed), negative determination is made in ST3, and the processing proceeds to ST5.

In ST4 corresponding to the control function of the actuator control section 120, the actuator control section 120 executes assist control that causes the electric actuator 70 to generate the assist force Fas in accordance with the pedal stroke location Lpd of the clutch pedal.

In ST5 corresponding to the control function of the automatic control request determination section 126, the automatic control request determination section 126 determines whether the automatic control request of the clutch 16 is output. When the automatic control request is not output, negative determination is made in ST5, and the present routine is ended. When the automatic control request is output, positive determination is made in ST5, and the processing proceeds to ST6.

In ST6 corresponding to the control function of the actuator control section 120, the electric actuator 70 executes the automatic connecting and disconnecting control of the clutch 16. Here, when the electric actuator 70 releases the clutch 16, the separation mechanism 76 separates the first member 78 and the second member 80, as a result of which the clutch pedal 50 and the clutch 16 are disconnected. Therefore, even when the clutch 16 is released, the pedal stroke location Lpd of the clutch pedal 50 does not change in conjunction with the release of the clutch 16. This makes it possible to eliminate the discomfort given to the driver.

As described in the foregoing, according to the present embodiment, the separation mechanism 76 is provided on the power transmission mechanism 56. Accordingly, the separation mechanism 76 separates the clutch pedal 50 and the release cylinder 54 when the electric actuator 70 applies the operating force to the release cylinder 54 while the clutch pedal 50 is not depressed. Hence, it is possible to prevent the situation where the pedal stroke location Lpd of the clutch pedal 50 is changed although the driver does not depress the clutch pedal 50.

According to the present embodiment, when the driver depresses the clutch pedal 50, the electric actuator 70 applies to the release cylinder 54 the assist force Fas (operating force) in the direction of reducing the depressing force Fft of the clutch pedal 50. Therefore, the depressing force Fft necessary for the driver to depress the clutch pedal 50 can be reduced. When the inertia travel condition is established while the driver does not depress the clutch pedal 50, the electric actuator 70 releases the clutch 16. Accordingly, as the travel resistance applied to the vehicle is reduced and the inertia traveling distance becomes longer, the fuel consumption reduction effect can be enhanced.

According to the present embodiment, when the electric actuator 70 moves the second member 80 to the side distanced from the first member 78, the pedal position keeping mechanism 82 keeps the first member 78 at the position where depression of the clutch pedal 50 is released. Therefore, change in the pedal stroke location Lpd of the clutch pedal 50 relating to the operation of the electric actuator 70 is prevented.

A description is now given of another embodiment of the present invention. In the following description, component members identical to those in the aforementioned embodiment are designated by identical reference signs to omit the description thereof.

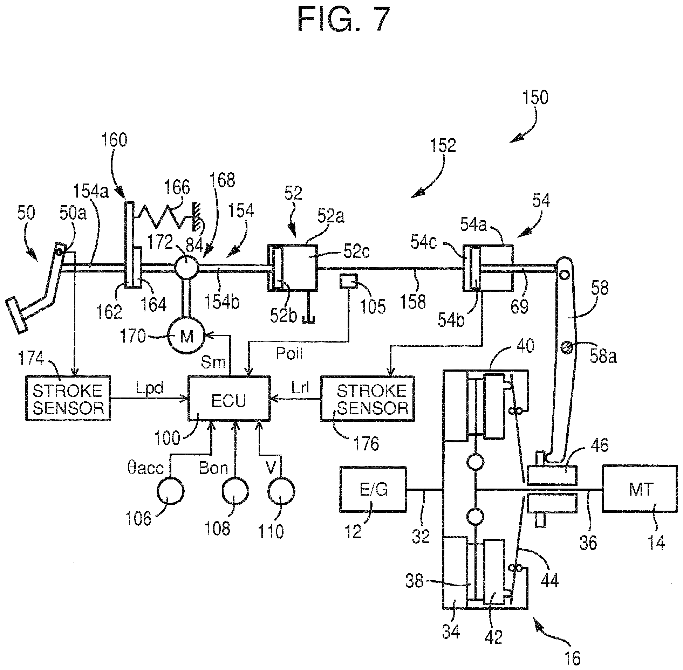

FIG. 7 illustrates a simplified structure of a connecting and disconnecting device 150 that connects and disconnects the clutch 16 corresponding to another embodiment of the present invention. Since the clutch 16 has the same structure as the aforementioned embodiment, the clutch 16 is designated by the same reference sign to omit the description thereof. The connecting and disconnecting device 150 is different from the connecting and disconnecting device 30 of the aforementioned embodiment in the point that the first cylinder 62 and the second cylinder 64 are not provided. Hereinafter, the description is mainly given of the difference from the connecting and disconnecting device 30 in the aforementioned embodiment.

The connecting and disconnecting device 150 is configured to include a clutch pedal 50, a release cylinder 54, a power transmission mechanism 152 that transmits depressing force of the clutch pedal 50 as operating force for the release cylinder 54, and a release fork 58.

The power transmission mechanism 152 operatively connects between the clutch pedal 50 and the release cylinder 54. The power transmission mechanism 152 is configured to include a coupling rod 154 that mechanically couples the clutch pedal 50 and a master cylinder 52, the master cylinder 52 that generates hydraulic pressure corresponding to depression of the clutch pedal 50, and an oil passage 158 that connects a hydraulic pressure chamber 52c formed in the master cylinder 52 and a hydraulic pressure chamber 54c formed in the release cylinder 54.

The coupling rod 154 is constituted of the first rod 154a and the second rod 154b that are placed in series. The separation mechanism 160 is provided between the first rod 154a and the second rod 154b. The separation mechanism 160 includes a first member 162 connected to the first rod 154a side, a second member 164 connected to the second rod 154b side, and a pedal position keeping mechanism 166 coupled with the first member 162. Since the separation mechanism 160 is basically similar in structure and operation to the aforementioned separation mechanism 76, the description thereof is omitted.

Above the second rod 154b, an electric actuator 168 is provided so as to allow power transmission to the second rod 154b. The electric actuator 168 is constituted of an electric motor 170 and a reducer 172 connected to the second rod 154b so as to allow power transmission. Since the electric actuator 168 is basically similar in structure and operation to the electric actuator 70 in the aforementioned embodiment, the description thereof is omitted.

In the present embodiment, the separation mechanism 160 and the electric actuator 168 (reducer 74) are placed between the clutch pedal 50 and the master cylinder 52, and the master cylinder 52 and the release cylinder 54 are coupled through the oil passage 158. Thus, the separation mechanism 160 and the electric actuator 168 (reducer 74) are placed between the clutch pedal 50 and the master cylinder 52, which makes it possible to eliminate the first cylinder 62 and the second cylinder 64 in the aforementioned embodiment. Accordingly, as compared with the aforementioned connecting and disconnecting device 30, the connecting and disconnecting device 150 can be simplified, and the increase in the number of parts count can be suppressed.

Since the details of the control of the connecting and disconnecting device 150 is basically the same as that in the aforementioned embodiment, the description thereof is omitted. In the present embodiment, a stroke sensor 174 attached to the clutch pedal 50 directly detects the pedal stroke location Lpd. The stroke sensor 176 detects the stroke location Lrl of the release cylinder 54 as a parameter relating to the connecting and disconnecting state of the clutch 16.

Also in the connecting and disconnecting device 150 configured as described above, the same effect as in the aforementioned embodiment can be obtained. Specifically, when the electric actuator 168 releases the clutch 16, the electric actuator 168 moves the second rod 154b to the release cylinder 54 side. At the time, in the separation mechanism 160, the first member 162 and the second member 164 are separated, and the pedal position keeping mechanism 166 keeps the first member 162 at the depression release position of the clutch pedal 50. Therefore, even when the clutch 16 is released, the clutch pedal 50 is kept at the depression release position. Therefore, it is possible to prevent the discomfort caused by change in the pedal stroke location Lpd of the clutch pedal 50 during automatic control of the clutch 16.

When abnormality occurs in the system of the connecting and disconnecting device 150, the clutch 16 can be released by the depressing operation of the clutch pedal 50 because the clutch pedal 50 and the release cylinder 54 are mechanically coupled. In that case, since the electric actuator 168 no longer applies the assist force Fas, the depressing force Fft of the clutch pedal 50 increases. This gives the driver a sense of discomfort, so that the driver can sense the occurrence of the abnormality. Furthermore, in the connecting and disconnecting device 150, the first cylinder 62 and the second cylinder 64 provided in the aforementioned connecting and disconnecting device 30 become unnecessary. Accordingly, the connecting and disconnecting device 150 can be simplified, and the increase in the number of parts count can be suppressed.

Although the embodiments of the present invention have been described in detail based on the drawings, the present invention is also applied to other modes.

For example, in the aforementioned embodiments, the pedal stroke location Lpd of the clutch pedal 50 is calculated from the stroke location Ls of the piston 62b of the first cylinder 62. However, the stroke location Ls may be any parameter as long as the pedal stroke location Lpd can be calculated based thereon. For example, the pedal stroke location Lpd may also be calculated by providing a sensor that detects the stroke location of the coupling rod 60, or a sensor that directly detects the pedal stroke location Lpd may be provided.

In the aforementioned embodiment, the rotation sensor 104 that detects the rotational position θm of the electric motor 72 is provided. However, the rotation sensor 104 may be replaced with a sensor that detects the stroke location of the release cylinder 54 or the stroke location of the second cylinder 64, for example. In short, the parameters relating to the connecting and disconnecting state (operating state) of the clutch 16 may suitably be changed.

In the aforementioned embodiments, the operation amount of the release cylinder 54 is transmitted to the release bearing 46 through the release fork 58. However, the present invention is applicable to the configuration in which a concentric slave cylinder is provided adjacent to the clutch 16.

Although the engine 12 is stopped during coasting in the aforementioned embodiments, the engine 12 may perform idle operation during coasting.

Although the reducer 74 is constituted of a ball screw in the aforementioned embodiments, any mechanism that converts rotational movement into translational movement, such as a rack and pinion, may suitably be applied.

The embodiments disclosed are merely examples, and the present invention may be carried out in modes to which various arrangements and modifications are applied based on the knowledge of those skilled in the art.

## Claims

1. A connecting and disconnecting device (30; 150) for a clutch (16), the connecting and disconnecting device (30; 150) comprising:
a clutch pedal (50) configured to be operated by a driver;
a clutch cylinder (54);
a power transmission mechanism (56; 152) configured to transmit depressing force of the clutch pedal (50) as operating force for the clutch cylinder (54);
an electric actuator (70; 168) connected to the power transmission mechanism (56; 152) so as to allow power transmission, the electric actuator (70; 168) being configured to apply the operating force to the clutch cylinder (54) through the power transmission mechanism (56; 152); and
a separation mechanism (76; 160) provided on a portion of a power transmission path in the power transmission mechanism (56; 152), the portion being between the clutch pedal (50) and the electric actuator (70; 168).

2. The connecting and disconnecting device (30; 150) according to claim 1, further comprising an electronic control unit (100) configured to control the electric actuator (70; 168) so as to reduce depressing force necessary to depress the clutch pedal (50) and to apply the operating force in a direction of releasing the clutch (16) to the clutch cylinder (54), when the driver depresses the clutch pedal (50).

3. The connecting and disconnecting device (30; 150) according to claim 1, further comprising an electronic control unit (100) configured to control the electric actuator (70; 168) so as to release the clutch (16), when the driver does not depress the clutch pedal (50).

4. The connecting and disconnecting device (30) according to any one of claims 1 to 3, wherein
the power transmission mechanism (56) includes a clutch master cylinder (52), a first cylinder (62), and a second cylinder (64),
the clutch master cylinder (52) is placed between the clutch pedal (50) and the separation mechanism,
the first cylinder (62) and the second cylinder (64) are placed between the clutch master cylinder (52) and the clutch cylinder (54), and
the separation mechanism (76) and the electric actuator (70) are placed between the first cylinder (62) and the second cylinder (64).

5. the connecting and disconnecting device (150) according to any one of claims 1 to 3, wherein
the power transmission mechanism (152) includes a clutch master cylinder (52) coupled with the clutch cylinder (54) through an oil passage (158), and
the separation mechanism (160) and the electric actuator (168) are placed between the clutch pedal (50) and the clutch master cylinder (52).

6. The connecting and disconnecting device (30; 150) according to any one of claims 1 to 5, wherein
the separation mechanism (76; 160) includes a first member (78; 164), a second member (80; 162), and a pedal position keeping mechanism (82; 166),
the first member (78; 164) is configured to interlock with the clutch pedal (50),
the second member (80; 162) is configured to interlock with the clutch cylinder (54) and to come into contact with the first member (78; 164) while the clutch pedal (50) is depressed, and
the pedal position keeping mechanism (82; 166) is configured to generate keeping force to keep the first member (78; 164) at a position where depression of the clutch pedal (50) is released.
